Europäisches Patentamt

European Patent Office

Office européen des brevets

(11) Publication number: **0 463 557 A1**

# EUROPEAN PATENT APPLICATION

(21) Application number: **91110059.2**

(22) Date of filing: **19.06.91**

(51) Int. Cl.⁵: **G07F 17/24**

(30) Priority: **19.06.90 IL 94780**

(43) Date of publication of application:
**02.01.92 Bulletin 92/01**

(84) Designated Contracting States:
**AT BE CH DE DK ES FR GB GR IT LI LU NL SE**

(71) Applicant: **Menahem, Miko**
**4 Yehuda Halevi Street**
**Ra'nana 43000(IL)**

(72) Inventor: **Menahem, Miko**
**4 Yehuda Halevi Street**
**Ra'nana 43000(IL)**

(74) Representative: **Modiano, Guido et al**
**MODIANO, JOSIF, PISANTY & STAUB**
**Baaderstrasse 3**
**W-8000 München 5(DE)**

(54) **A portable and reloadable multi-factor metering device particularly useful as a parking meter and location register.**

(57) The invention is an electronic device (1), which can be loaded repeatedly with "meter units," by a meter-unit filling computer. The new device (1) according to the invention can be used for street parking, in parking lots and on toll roads, subways, buses the same single device can be used in many countries and cities.

The invented device (1) is posted on the inner side of the windshield of parked car. After it is switched on, it deducts meter units at a rate determined by a set of factors (Deduction rate factors). Some of the deduction rate factors are pre-selected by the driver from the invented device's memory at the time of use. The said deducted meter units are accumulated in the memory of the invented device in relation to the said pre - selected Deduction rate factors, and are transferred to meter-unit filling computer in order to credit the appropriate authority.

FIG 1

Field of Invention

This invention concerns an electronic device in which a metering rate is determined by multiple factors.

The invention is particulary useful as a meter for street parking of vehicles, in parking lots and location registration on toll roads, and public transport means such as subways and buses.

Background of invention and prior art

Several methods are used today by parking resources suppliers in order to designate and delimit the parking time of vehicles and to encourage a high turnover. These means include parking meters, parking cards, parking disks and electronic cards.

Parking meters are coin-operated mechanical timers. Parking meters are expensive to install and require maintenance, because of both weather and street vandalism.

A parking disk is a printed cardboard sleeve which has two windows and contains a printed cardboard disk. The time of parking appears in one window and the required time of departure in the other, adjusted by rotation of the disk. The disk is placed in front of the car behind the windshield. Parking disks wear out rapidly and supervision is difficult since the printing is small.

Parking cards, as used in some locations, are cardboard tickets with pre-purchased tear-out tabs indicating date and time of parking and the expiration hour of the parking period. Each card is designed to be used once only. The cards are usually displayed behind the side window of the car. The disadvantage of the cards lies in the inconvenience of removing the tabs, inflexibility of period of parking, and the possibility of reuse of cards by pasting or reinserting torn tabs.

Another method is the electronic card, which is an improvement of the parking card. It includes a microprocessor and a display. The driver is able to switch it off immediately after he leaves the parking place. These are disposable, and thus expensive. They are inflexible because once produced and sold, the tariff according to which they operate cannot be updated . Furthermore, they can be used in only a limited number of parking zones. Each device credits only one parking authority; thus the driver must purchase different cards for different parking authorities.

Description of the Invention.

The invention is an electronic device, which can be loaded repeatedly with "meter units," by a meter-unit filling computer. The new device according to the invention can be used for street parking, in parking lots and on toll roads, subways, buses the same single device can be used in many countries and cities.

The invented device is posted on the inner side of the windshield of a parked car. After it is switched on, it deducts meter units at a rate determined by a set of factors (Deduction rate factors). Some of the deduction rate factors are pre-selected by the driver from the invented device's memory at the time of use. The said deducted meter units are accumulated in the memory of the invented device in relation to the said pre - selected Deduction rate factors, and are transferred to meter-unit filling computer in order to credit the appropriate authority.

The invented device is particularly convenient because the device can be refilled with meter units which represent fees, and by the fact that the very same device can be used by the same driver in different countries, states, and cities, for parking in different parking lots and using different toll roads.

The invention is herein described, by way of example, with reference to the accompanying drawings wherein:

Fig. No. 1   - ILLUSTRATES THE PORTABLE AND RELOADABLE MULTI-FACTOR METERING DEVICE -

Fig. No. 2   - ILLUSTRATES THE PORTABLE AND RELOADABLE MULTI-FACTOR METERING DEVICE-Internal components.

Fig. No. 3   - ILLUSTRATES A MICROPROCESSOR IMPLEMENTATIA IN THE METERING DEVICE.

Fig. No. 4   - IS A FLOW CHART OF LOGIC CIRCUITRY IN THE DEVICE.

Fig. No. 5   - ILLUSTRATES A MICROPROCESSOR IMPLEMENTATIA IN THE LOADABLE METERING DEVICE.

Fig. No. 6   - IS A FLOW CHART OF LOGIC CIRCUITRY IN THE LOADING PROCESS.

Fig No. 7   - ILLUSTRATES A MICROPROCESSOR IMPLEMENTATIA IN A REMOTE CONTROLLER UNIT.

Fig No. 8   - IS A FLOW CHART OF LOGIC CIRCUITRY IN THE REMOTE CONTROL UNIT.

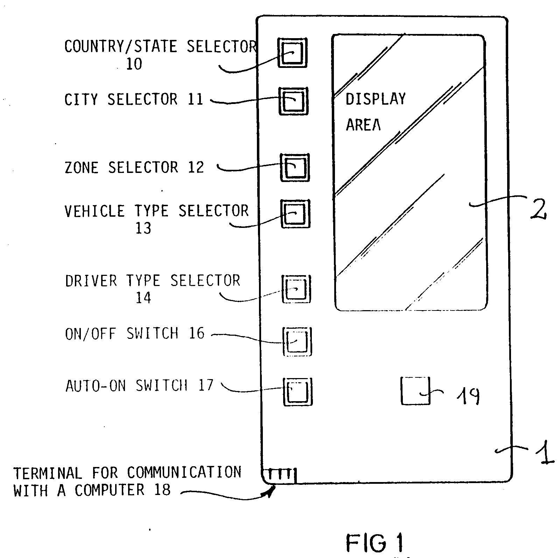

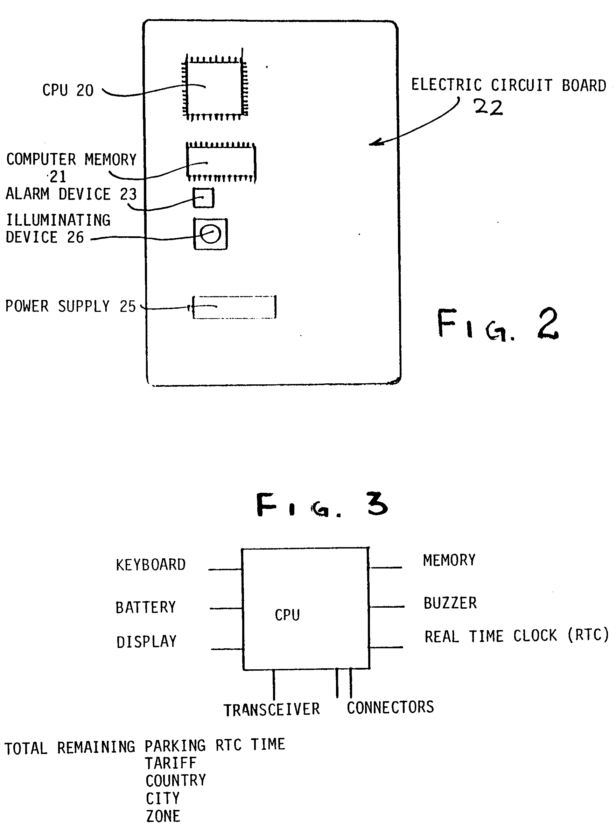

The preferred embodiment of the invention is as follows,and is illustrated in Figs. 1,2 and 3.

A small portable reloadable multi-factor parking meter (1) which can be mounted in any car, consisting of: a microprocessor which itself includes a CPU(20), a computer memory (21) and an internal clock(22); and an alphanumeric display device(2); an illuminating device(26); a keyboard(10-17); electronic circuits(22); an alarm device(23); a terminal for communicating with computers(18); a power supply device(25) and a photocell(19) for charging the power supply device.

In the preferred embodiment the device includes also a transceiver

The new device is loaded by a meter-unit filling computer which, via communication process, loads meter units, Deduction rate factors, and instructions for calculating the rate of deduction of the said meter units into the memory of the portable device according to the invention.

The new device loads the said deducted meter units, as well as the respective Deduction rate factors into the memory of the meter-unit filling computer.

The meter-unit filling computer can refill the new device with meter units an unlimited number of times, thus avoiding the need for replacement of the device. At the same time as the device is refilled with meter units, the meter-unit filling computer also loads new Deduction rate factors and new instructions related to the Deduction rate into the memory of the Multi-factor meter.

When the new device is turned on, its CPU starts deducting meter units at the rate determined by the instructions and the Deduction rate factor stored in its memory.

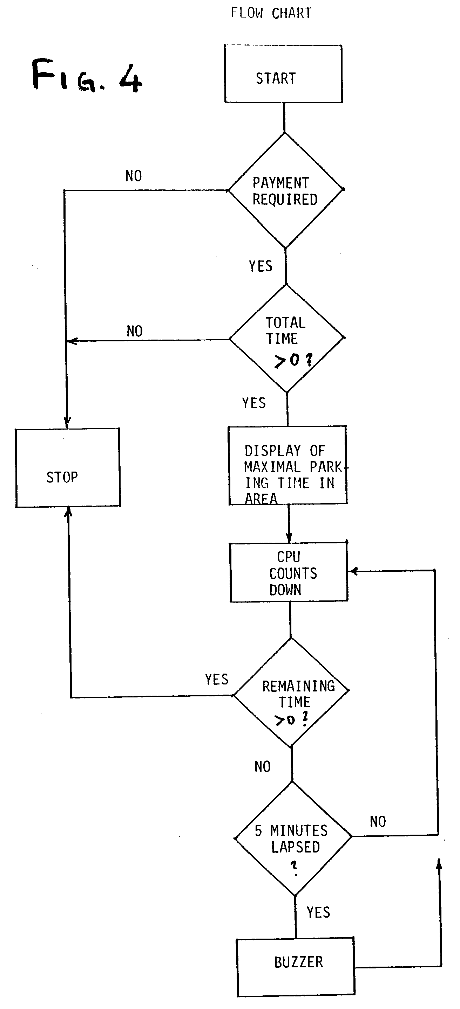

The logic in accordance with which the device operates is clearly shown in Fig. 4. which is a flow chart of the operation of the parking system.

Accordingly, the operation routine begins to check whether payment is required at this hour. In the event no payment is required, the system will not be activated. However, if payment is required, the system will check whether time units are available, if no time units are available, the system will stop. However, if time units are available, the system will display the maximal parking time specific area and count down of the CPU will start. If and when count down reaches zero, the system will stop while if there are 5 minutes left, the system will activate the buzzer, if more than 5 minutes are available, the count down will continue, untill stopped or until time runs out.

The memory contains the instructions for calculating the rate of deduction and a built-in unique identity number.

The memory includes the total quantity of meter units available and various deduction rate factors, which are used by the CPU in conjunction with the instructions stored in the memory in order to calculate meter units count-down rate. The memory also stores the said deducted meter units along with the respective factors, that were preselected by the driver.

The display device which may be, a liquid crystal display, displays the remaining quantity of available meter units, the deduction rate factor that can be chosen to determine the deduction rate, the Deduction rate itself and the actual remaining time until the number of meter units will reach zero at the present deduction rate. (According to the formula: remaining time = meter units divided by current deduction rate).

An internal clock usually serves as the main deduction rate factor, and all other deduction rate factor cause an acceleration or slow-down in rate at which the meter units are deducted relative to the rate determined by time alone. In some cases (such as in toll road use), the internal clock may be ignored for the purpose of deduction rate calculation.

A communication device is used for communication between the device and a meter-unit filling computer, in order to refill meter units instructions and Deduction rate factors, in the new device; and in order to transfer deducted meter units according to the selected factors.

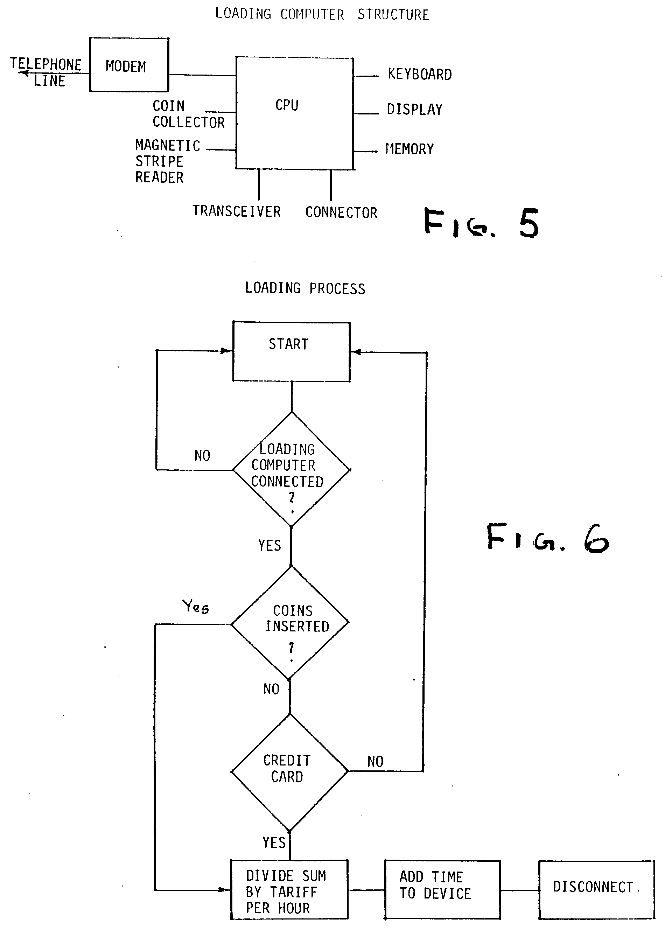

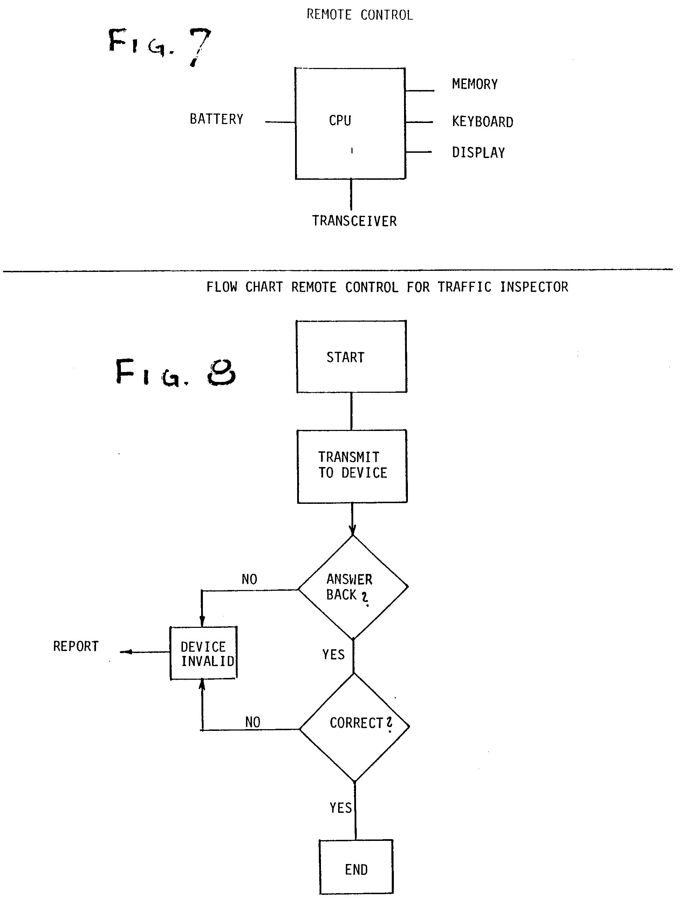

As can be seen in Figs. 5 and 6 which illustrate the implementation of the loading of the metering device. The metering device could be reloaded via modem and the local telephone network.

As can be seen in the flow chart which illustrates the logic of the loading process. The device is attached to the loading computer if no connection has been established, the system will start again (untill connection is established) either coins or credit card are used in order to make the respective payment. If payment has been done, the respective time units being added to the device and the device is disconnected from the computer.

Application of the invented device for Street Parking

The process starts when the driver inserts his/hers new device into the slot in a meter-unit filling computer in order to transfer meter units from the meter-unit filling computer to the new device. The driver specifies the number of meter units to be loaded, or the amount of money to be used for the purchase.

After payment is made, the meter-unit filling computer loads the meter units purchased, as well as updated instructions and Deduction rate factors into the device.

When the driver wants to park on a street that is marked by the municipality as a fee-required parking zone, the following procedure takes place:

a. The driver enters a password. The device operates only if the correct password is entered. This deters theft of the device.

b. The driver selects the contents of a certain deduction rate factors from the memory of the device, by using the selectors or alphanumeric keyboard, in accordance to the parking location; (e.g., country/state; city; zone; vehicle type (Van, sedan, etc.); driver category (citizen, resident of current parking zone; disabled; senior citizen; tourist, etc.).

The Deduction rate factors last selected are stored in the memory, thus eliminating the need to re - select unchanged Deduction rate factors.

c. The selected Deduction rate factors are displayed on the display device.

d. The driver then switches on(16) the device.

e. The display shows the maximum time permitted to park according to the selected Deduction rate factors; the initial quantity of meter units; the current Deduction rate; and the available time left in the device, as calculated according to the available meter units and the deduction rate.

f. The driver places the device in the car behind the windshield.

g. The CPU starts deducting meter units at the rate determined by the instructions in its memory and the pre-selected Deduction rate factors, as well as such factors as the time elapsed and the time of day (according to the internal clock).

If the elapsed time exceeds the "maximum permissble parking time" (as specified in the instructions), the CPU switches off the device.

The new device also turns itself off if the negative value of the remaining meter units exceeds the maximum permitted, or in the case that parking is free of charge at the current time.

If the Auto-on Switch (17) is depressed by the driver, and a parking fee is required at the current time of the day, the device switches on and start deducting automatically.

The alarm device beeps after every given number of parking units is deducted, to indicate to the driver that deduction is in process.

All deducted meter units are accumulated in a separate part of the memory, called "Used meter units", together with the selected Deduction rate factors.

The meter inspector inspects each car and checks that there is a one of the new devices in operation, and that the proper selection has been made of the Deduction rate factors namely: country, city, and zone (according to the parking location); vehicle type, and driver category (indicated by labels pre-supplied by the municipality and posted on the windshield, next to the invented device).

The inspection would be performed by a remote control unit having several functions (Fig. 7) which could operate on any know wireless system. The logic circuitry is clearly illustrated in Fig. 8.

Fig. 7 illustrates the remote control unit which could be used by an inspector. The CPU has its power source by mens of a battery, a memory, a keyboard, a display and transceiver. The operation of the said remote control (Fig 8) is by transmitting a signal to the device and receiving of an answer back, if no answer back is received, the device is invalid and a report is being issued, while if an answer back is received and it complies with all factors, such as area, time, etc., the check stops while if the answerback does not comply with the specific data concerning the specific are, a report is being issued.

The process described above is repeated every time the driver parks in a zone where a parking fee is required.

Obviously, in the course of time, the meter units run out, and the driver has to refill the invented device. This is done at one of the meter-unit filling computers.

While the meter-unit filling computer refills the invented device with meter units, it also loads new Deduction rate factors and new instructions regarding deduction of meter units. In addition, the "used meter units" are transferred to the meter-unit filling computer from the invented device.

The "used meter units" accumulated in the meter-unit filling computer from numerous devices according to the invention are transmitted, via telecommunications or by computer memory medium, to a central computer, from which they are reported to each parking authority, in order to calculate its share in the collected money, as well as for statistics purposes.

Use in Parking Lots

At the entrance to the parking lot there is an electrically operated gate which is connected to a local meter-unit filling computer.

When the driver arrives at the gate, he/she inserts his/her new device into the slot of the meter-unit filling computer.

The meter-unit filling computer checks the identity number of the device as written in the memory (This check is necessary only in private parking lots) and opens the gate or leaves it closed, depending on the availability of parking places in that parking lot or other factors (each entering and exiting car is counted by the meter-unit filling computer.)

If the gate is opened, the meter-unit filling computer records the time-in and the date in the invented device.

When the driver leaves the parking lot, he or she inserts his/her device in the slot of the meter-unit filling computer, or by wireless communication. The meter-unit filling computer reads the time-in, and according to the instructions and Deduction rate factors, it deducts the quantity of meter units due and transfers them to the "used meter units" together with the identity number of the meter-unit filling computer.

When the driver refills his/her invented device at any meter-unit filling computer, the Parking Lot owner is credited as described with regard to street parking.

Use on Toll Roads as an example for location registration.

Toll roads are highways that vehicles have to pay a charge to use. Payment is usually made when driving onto the highway or when exiting. In some case drivers receive a card at the point where they enter the road and pay a fee, determined by the section of the road used, at the exit by which they depart. The pay points are sometimes equipped with automatic pay machines, which require exact change, and are sometimes fully staffed with fee-collectors. Even in the case that there are machines, personnel is required to collect from those who do not have change, and to handle problems that may arise.

Using devices according to the invention, at each entrance and exit of the toll road there is an electrically operated gate which is connected to a meter-unit filling computer.

When the driver arrives at the gate, he/she his/hers inserts the invented device into the slot (**) of the meter-unit filling computer.

The gate is opened, and the meter-unit filling computer records the time-in and the location of entry in the invented device. On toll roads that charge according to the number of passengers this number is also recorded.

When the driver exits the toll road, he or she inserts his/her device in the slot of the meter-unit filling computer located in the exit. The meter-unit filling computer reads the time-in and entry location, and according instructions and Deduction rate factor, it deducts the quantity of meter units due and transfers them to the "Used meter units" together with the identity number of the meter-unit filling computer.

When the driver refills his/her device at any meter - unit filling computer, the toll road authority is credited as described with regard to street parking.

Similarly, the invention can be used for subways, trains and buses.

It is within the scope of the invention to use the device allways by any known wireless system and a remote control unit.

SUMMARY

Although the has been described above as embodied in a metering and registration device to be used for street parking, in parking lots or location register on toll roads and subways, the invention could also be aplied to numerous other uses requiring multi-factor metering and registration device.

Examples of such other uses include collection of subway and bus fare, sports facilities, rental fees or alike.

The central characteristics of this portable reloadable multi-factor meter in terms of the driver are that it is: a multi purpose, refillable, single parking meter which can be used in many cities, parking lots or toll roads. It is also more than existing systems for metering parking, as the driver pays only for actual parking time, unlike in usual parking meter.

In all cases, there no need of using coins to pay parking fees or tolls, and the driver has a pool of meter units that can be used any time.

The central characteristics in terms of parking resource suppliers (e.g., municipalities, parking lots and toll roads), are the ability to decide dynamically, according to various parameters, about their parking price policy, and thus affect the utilization of parking places accordingly. It is as labor-saving device in that it eliminates much of the work related to collecting fees and supervising use of resources.

It is further within the scope of the invwention to use the device as payment means where the selling point for goods or services is adapted tobe paid by such means. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. A portable metering device particularly useful as a meter for street parking, in parking lots and for location registration on toll roads, comprising:

   a microprocessor;

   an internal clock;

   a computer storage device for storing the following data: meter-units representing pre-purchased parking time; data (factors) for calculation of the deduction rate of the pre-purchased meter-units; country names; city names; zone names; vehicle types; driver types; maximum permitted parking time zone; minimum meter units; fee required hours in per each zone;

data for time-in and its location; data for time-out and its location; parking authorities; an internal serial number; a password for switching on; a loading-password required for checking if meter-unit loading is carried out by authorized meter-units filling device; data of used meter-units to be credited to each city or parking authority;

an alphanumeric display means for displaying the following data: selected country; selected city; selected zone; selected vehicle type; selected driver type; deduction rate; current quantity of meter-units available; current permitted time left for parking in current zone; current available time according to current quantity of meter-units; country selector key means for manually selecting a country; city selector key means for manually selecting a city; zone selector key means for manually selecting a zone; vehicle-type selector key means for manually selecting a vehicle type; driver-type selector key means for manually selecting the driver type; alphanumeric key means for manually selecting a country, a zone, a driver type and a vehicle type; a device for the deduction of pre-purchased meter-units.

an on-off switch;

a password selector key means for entering a combination representing a password;

an auto-on switch for automatic switch on;

a communication device for communication with computers;

a power supply device for supplying power to the electrical circuits;

an alarm device that indicates that the metering device is operating;

an illumination device for illuminating the said display device;

an external serial number;
an electronic board.

2. A metering device according claim 1, wherein said communication device is connected temporarily to a computer in order to be loaded with meter-units in its memory and/or be loaded with instructions in its memory to calculate the deduction rate of meter-units.

3. A metering device according to one or more of the preceding claims, wherein said communication device is connected temporarily to a computer in order to be loaded with data used by said instructions for calculating the meter-units deduction rate from said loaded meter-units in said memory and/or for registering time-in and its location, and time-out and its location.

4. A metering device according to any of the preceding claims wherein said communication device is wireless.

5. A metering device according to any preceding claims, and comprising selecting means for selecting numerous factors from a plurality of choices, in order to calculate the deduction rate.

6. A metering device according to one or more of the preceding claims, and comprising selecting means for selecting a county and/or a city and/or a zone and/or a vehicle type and/or a driver type from a plurality of countries and/or cities and/or zones and/or vehicle types and/or driver types stored in said memory, pre-loaded from a computer that is called a meter-unit filling device.

7. A metering device according to any preceding claims, and comprising keying means for entering a password in the said memory device.

8. A metering device according to any preceding claims, and comprising comparing means for comparing the said pre-keyed password with the current password.

9. A metering device according to any preceding claims, and comprising a device that prevents switching on in the case that current password and pre-keyed password are not equal.

10. A metering device according to any preceding claims, and comprising a device for deduction of said pre-purchased meter units from said memory in a rate according to the pre-selected country; pre-selected city; pre-selected zone; pre-selected vehicle type; pre-selected driver type; internal clock; time of the day; elapsed parking time.

11. A metering device according to any preceding claims, and comprising a device for indicating every given deducted meter-units by sound.

12. A metering device according to one or more of the preceding claims, and comprising a device for comparing the stored data about fee-required hours and time of day as given by said internal clock and/or for comparing the stored data of maximum permitted parking time for said pre-selected zone and elapsed time since said metering device was switched on.

13. A metering device according to any preceding claims, and comprising a device that switches off the metering device in the following events: the hour according to said internal clock is not fee-required time as stored in the said memory; the elapsed time since the metering device was switched on exceeds maximum permitted parking time according to pre-selected zone; the current number of meter-units is less than minimum meter units stored in said memory of the metering device.

14. A metering device according to any preceding claims, and comprising a device in which the display blinks in order to prevent use of a forged display of the current meter-units.

15. A metering device according to any preceding claims, and comprising a comparing device that compares the loading password of the current computer connected for the purpose of meter-unit filling to the said loading password stored in the said memory in order to ascertain whether it is an authorized meter-units filling device.

16. A metering device according to any preceding claims conprising a transciver to enable wireless communication with a remote control unit.

17. A metering device according to any preceding claims, comprising a remote control unit to enable wireless communications with the device.

18. A metering device according to any preceding claims, and comprising a metering device according to any preceding claims, wherein said communication device is connected temporarily to a meter-units filling computer in order to load into the meter-units filling computer from the metering device, the data on used parking units for crediting the parking authorities.

19. A device according to any of the preceding claims adapted to be used as payment means for goods or services where the selling point is adapted tp be paid by said means.

COUNTRY/STATE SELECTOR 10

CITY SELECTOR 11

ZONE SELECTOR 12

VEHICLE TYPE SELECTOR 13

DRIVER TYPE SELECTOR 14

ON/OFF SWITCH 16

AUTO-ON SWITCH 17

TERMINAL FOR COMMUNICATION WITH A COMPUTER 18

DISPLAY AREA

2

19

1

FIG 1

CPU 20

ELECTRIC CIRCUIT BOARD
22

COMPUTER MEMORY
·21

ALARM DEVICE 23

ILLUMINATING
DEVICE 26

POWER SUPPLY 25

FIG. 2

FIG. 3

KEYBOARD — CPU — MEMORY

BATTERY — BUZZER

DISPLAY — REAL TIME CLOCK (RTC)

TRANSCEIVER   CONNECTORS

TOTAL REMAINING PARKING RTC TIME
            TARIFF
            COUNTRY
            CITY
            ZONE

FLOW CHART

FIG. 4

START

PAYMENT REQUIRED

NO

YES

TOTAL TIME >0 ?

NO

YES

STOP

DISPLAY OF MAXIMAL PARKING TIME IN AREA

CPU COUNTS DOWN

REMAINING TIME >0 ?

YES

NO

5 MINUTES LAPSED ?

NO

YES

BUZZER

## LOADING COMPUTER STRUCTURE

FIG. 5

## LOADING PROCESS

FIG. 6

REMOTE CONTROL

FIG. 7

FLOW CHART REMOTE CONTROL FOR TRAFFIC INSPECTOR

FIG. 8

## DOCUMENTS CONSIDERED TO BE RELEVANT

EP 91110059.2

| Category | Citation of document with indication, where appropriate, of relevant passages | Relevant to claim | CLASSIFICATION OF THE APPLICATION (Int. Cl.5) |
|---|---|---|---|
| A | EP - A2 - 0 325 302 (OMRON TATEISI ELECTRONICS CO.) * Totality * | 1,6 | G 07 F 17/24 |
| A | EP - A2 - 0 193 320 (ELECSELL LIMITED) * Totality * | 1,5 | |
| A | WO - A1 - 88/09 022 (SOCIETE INTERNATIONALE POUR L'INNOVATION S.A.) * Totality * | 1 | |
| A | EP - A1 - 0 206 884 (FLONIC S.A.) * Totality * | 1 | |

TECHNICAL FIELDS
SEARCHED (Int. Cl.5)

G 07 F 15/00
G 07 F 17/00

The present search report has been drawn up for all claims

| Place of search | Date of completion of the search | Examiner |
|---|---|---|
| VIENNA | 25-09-1991 | BEHMER |

EPO FORM 1503 03.82 (P0401)